# EUROPÄISCHE PATENTSCHRIFT

(11) **EP 0 731 288 B1**
(45) Veröffentlichungstag und Bekanntmachung des Hinweises auf die Patenterteilung: **27.09.2000**
(21) Anmeldenummer: 95103795.1
(22) Anmeldetag: 16.03.1995
(51) Int. Cl.: F16D 69/04

(54) **Verfahren zur Herstellung eines Bremsbelages, sowie Trägerplatte hierfür**
Method for producing a brake pad and backing plate therefor
Procédé de fabrication d'un patin de frein et plaque de support pour ce patin

(30) Priorität: 07.03.1995 DE 19507916
(43) Veröffentlichungstag der Anmeldung: 11.09.1996
(73) Patentinhaber: BBA Friction GmbH, 51375 Leverkusen (DE)
(72) Erfinder: Hell, Manfred, D-51515 Kürten (DE)
(74) Vertreter: Dallmeyer, Georg, Dipl.-Ing.

(56) Entgegenhaltungen:
- FR-A- 842 684
- US-A- 5 141 083
- PATENT ABSTRACTS OF JAPAN vol. 6, no. 246 (M-176) 4. Dezember 1982 & JP-A-57 144 320 (AKEBONO BRAKE)

## Beschreibung

Die Erfindung betrifft ein Verfahren zur Herstellung eines Bremsbelages nach dem Oberbegriff des Anspruchs 1, sowie ein Verfahren zur Herstellung einer Trägerplatte nach dem Oberbegriff des Anspruchs 9.

Bei der Herstellung von Bremsbelägen ist bekannt, den Reibbelag auf eine Trägerplatte zu pressen und zwischen Trägerplatte und Reibbelag eine Klebeschicht vorzusehen, um die Haftung zwischen Reibbelag und Trägerplatte zu erhöhen. Die durch den Klebstoff erzielbare Haftung zwischen Reibbelag und Trägerplatte ist jedoch bei hochbelasteten Bremsbelägen bei Hochleistungsfahrzeugen und Nutzfahrzeugen, insbesondere wegen der hohen auftretenden Bremstemperaturen, nicht ausreichend.

Zur Haftungserhöhung sind auf der dem Reibbelag zugewandten Oberfläche der Trägerplatte bereits diverse Umformungen der Trägerplattenoberfläche vorgeschlagen worden, um die Haftung zwischen Reibbelag und Trägerplatte zu erhöhen.

Aus der DE-C-38 43 901 ist eine mit einem Reibbelag bestückte Trägerplatte bekannt, die auf ihre dem Reibbelag zugewandten Oberfläche Einkerbungen mit Hinterschneidungen aufweist, in die das Reibmaterial zur Haftungserhöhung eindringen kann. Da sich das Reibmaterial in der Trägerplatte verankert, wird die maximale Scherfestigkeit von den Eigenschaften des Reibmaterials begrenzt.

Aus der EP-A-0 084 591 ist ein Verfahren zur Herstellung eines Bremsbelages bekannt, der eine Trägerplatte aufweist, die auf der den Reibbelag tragenden Seite mit einer Strukturoberfläche versehen ist. Diese Strukturoberfläche weist Hinterschneidungen auf, so daß das Reibmaterial auf der Trägerplatte verankert werden kann. Dieses Herstellverfahren ist in der Produktion kostenaufwendig.

Aus der US-A-3 757 018 ist schließlich bekannt, den Reibbelag mit Hilfe von Nieten auf der Trägerplatte zu verankern. Das Einbringen der Nieten erfordert zusätzliche Arbeitsgänge und zusätzliche Teile, so daß auch diese Art der Verankerung kostenaufwendig ist.

Aus dem Dokument JP-A-57144320 ist ein Bremsbelag bekannt, bei dem Vorsprünge auf der dem Reibbelag zugewandten Seite der Trägerplatte mit Hilfe einer Prägepresse hergestellt worden ist. Die Vorsprünge und Aussparungen in der Trägerplatte sind durch einen Umformvorgang während der Herstellung der Trägerplatte entstanden. Wie die Hinterschneidungen gebildet sind, ist nicht ersichtlich.

Der Erfindung liegt die Aufgabe zugrunde, ein Verfahren zur Herstellung eines Bremsbelages bzw. einer Trägerplatte anzugeben, bei dem die Verankerung des Reibbelages auf der Trägerplatte höchsten Scherfestigkeitsanforderungen genügt, und das die Herstellung von Bremsbelägen mit geringem Zeit- und Kostenaufwand ermöglicht.

Zur Lösung dieser Aufgabe dienen die Merkmale des Anspruchs 1 bzw. 9.

Die Erfindung sieht in vorteilhafter Weise vor, daß in einem ersten Schritt in einem Umformvorgang Teile der Trägerplatte auf der dem Reibbelag zugewandten Seite der Trägerplatte zu vorstehenden noppenartigen Vorsprüngen durchgedrückt werden, und daß in einem zweiten Schritt in Gegenrichtung zum Umformvorgang des ersten Schrittes die noppenartigen Vorsprünge aufgespalten und umgeformt werden, wodurch Hinterschneidungen gebildet werden.

Ein wesentlicher Vorteil des erfindungsgemäßen Verfahrens besteht darin, daß der Umformvorgang des ersten Schrittes gemeinsam mit anderen ohnehin erforderlichen Ausstanzungen erfolgen kann, so daß hierfür kein zusätzlicher Bearbeitungsschritt erforderlich ist. In dem zweiten Schritt wird der in dem ersten Schritt gebildete Vorsprung auseinandergespreizt, wodurch sich in vorteilhafter Weise kräftig ausgebildete Hinterschneidungen ergeben, die als Verankerungsmittel zur Aufnahme von hohen Scherkräften dienen.

Die noppenartigen Vorsprünge stehen nach dem zweiten Verfahrensschritt maximal um ca. 2,0 bis 2,5 mm von der Trägerplattenoberfläche ab. Diese Noppenhöhe ermöglicht eine optimale Verankerung des Reibbelages, ohne daß die nutzbare Belagstärke des Reibbelages wesentlich beeinträchtigt wäre.

Bei dem Umformvorgang des zweiten Verfahrensschrittes wird das Werkzeug ausgehend von der Oberkante der Vorsprünge um ca. 2,5 bis 3 mm zugestellt. Dadurch wird der Vorsprung kräftig auseinandergespreizt.

Das Werkzeug für den zweiten Umformvorgang ist vorzugsweise mit einer pyramidenförmigen Spitze versehen, die das Aufspalten des Nockens erleichtert.

Bei dem Umformvorgang des ersten Schrittes wird die Trägerplatte zur Herstellung des noppenartigen Vorsprungs um ca. 2,5 bis 3,5 mm, vorzugsweise ca. 3 mm, durchgedrückt. Bei einer Trägerplattenstärke zwischen 5 und 7 mm ergeben sich dadurch einerseits keine Schwächungen der Trägerplatte selbst und andererseits ausreichend hohe Vorsprünge für eine kräftige Verankerung.

Vorzugsweise werden in dem ersten Schritt im Querschnitt kreisförmige noppenartige Vorsprünge mit einem Verhältnis von Durchmesser zur Trägerplattenstärke zwischen 1 und 2, vorzugsweise zwischen 1 und 1,5, hergestellt.

Eine erfindungsgemäße Trägerplatte, hergestellt nach den zuvor beschriebenen Verfahrensschritten, weist daher mit der Trägerplatte einstückige, durch Umformen gebildete noppenartige Vorsprünge mit Hinterschneidungen auf, die ca. 2,0 bis 2,5 mm von dem Reibbelag zugewandten Trägerplattenoberfläche abstehen.

Im folgenden werden unter Bezugnahme auf die Zeichnungen Ausführungsbeispiele der Erfindung näher erläutert.

Es zeigen:
- Fig. 1: ein erstes Ausführungsbeispiel einer erfindungsgemäßen Trägerplatte,
- Fig. 2: einen Schnitt entlang der Linie II-II in Fig. 1,
- Fig. 3: einen vergrößerter Querschnitt eines erfindungsgemäß hergestellten Vorsprungs,
- Fig. 4: eine Draufsicht auf den Vorsprungs,
- Fig. 5: eine Draufsicht auf den erfindungsgemäßen Bremsbelag,
- Fig. 6: die Rückseite des Bremsbelages,
- Fig. 7: ein zweites Ausführungsbeispiel einer erfindungsgemäßen Trägerplatte, und
- Fig. 8: einen Querschnitt durch einen Vorsprung des zweiten Ausführungsbeispiels.

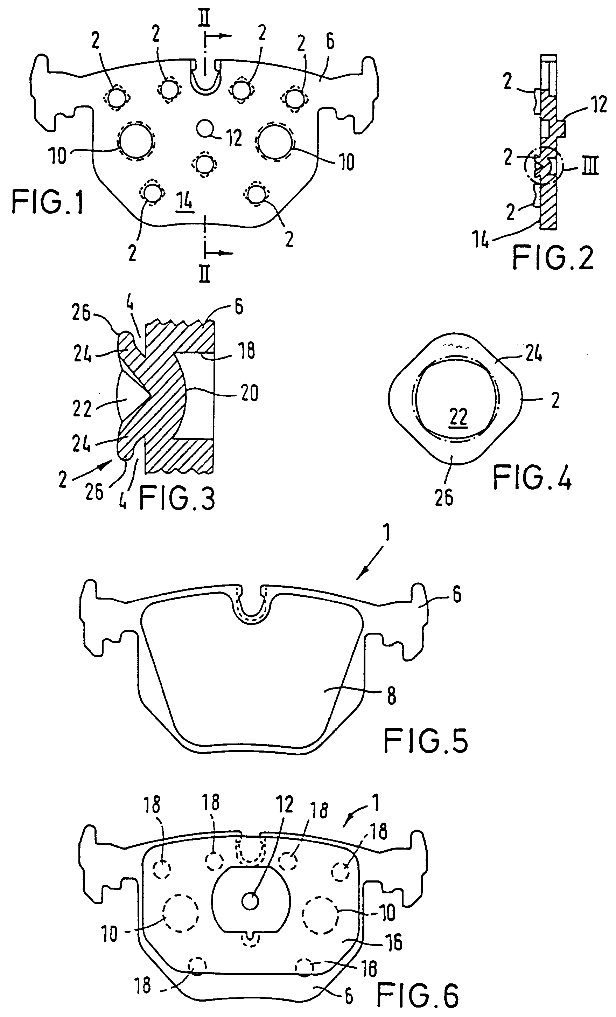

Die in Fig. 1 dargestellte Trägerplatte 6 ist aus einem gewalzten Bandstahl ausgestanzt. Sie ist ihrer Außenkontur einer bestimmten Scheibenbremse angepaßt. Zwei kreisförmige, symmetrisch zu der Symmetrieachse der Trägerplatte angeordnete Aussparungen 10 und eine Durchdrückung 12 dienen zur Befestigung und Verankerung eines auf der Rückseite der Trägerplatte, d.h. auf der dem Reibbelag 8 abgewandten Seite, angeordneten Dämpfungsblechs 16. Die Trägerplatte 6 weist auf der dem Reibbelag 8 zugewandten Seite von der Trägerplattenoberfläche 14 abstehende Vorsprünge 2 auf, die ebenfalls bezüglich der Symmetrieachse der Trägerplatte 6 vorzugsweise symmetrisch angeordnet sind.

Die noppenartigen Vorsprünge 2 sind, wie am besten aus den Fign. 2 und 3 erkennbar ist, als Durchdrückungen gestaltet und sind daher einstückig mit der Trägerplatte 6. Zur Herstellung der Vorsprünge 2 werden, beispielsweise während der Herstellung der anderen Aussparungen 10 und Durchdrückungen 12, zunächst mehrere kreisförmige Noppen mit einem Durchmesser von ca. 6 mm mit einem Werkzeug mit konkav geformter Spitze von der Rückseite der Trägerplatte 6 her durchgedrückt, so daß eine Vielzahl von Noppen von der Trägerplattenoberfläche 14 abstehen. Generell beträgt das Verhältnis von Noppendurchmesser zu Trägerplattenstärke zwischen 1 und 2, und zwar bevorzugt etwas über 1.

In einem zweiten Verfahrensschritt wird ein Werkzeug in Gegenrichtung gegen die vorstehenden Noppen gedrückt, um in einem weiteren Umformvorgang die Noppen aufzuspalten und Vorsprünge 2 mit Hinterschneidungen 4 aus den Noppen zu bilden. Dabei wird ein Werkzeug mit pyramidenförmiger Spitze verwendet, die ein Aufspalten der Noppen 2 erleichtert. Es können auch Werkzeuge mit kegelförmiger Spitze verwendet werden, jedoch werden solche mit pyramidenförmiger Spitze bevorzugt.

Wie am besten aus Fig. 3 ersichtlich ist, werden durch das Aufspalten der Vorsprünge 2 kräftige Hinterschneidungen 4 gebildet, mit denen der Reibbelag 8 so auf der Trägerplatte 6 verankert werden kann, daß hohe Scherkräfte aufgenommen werden können. Auf der Rückseite der Trägerplatte 6 verbleiben kreisförmige Aussparungen 18 mit einer Tiefe von 2 bis 3 mm, deren Böden 20 konvex gekrümmt sind.

Der Mindestabstand der Vorsprünge 2 von dem Rand der Trägerplatte 6 soll mindestens 3,5 mm betragen.

Die Tiefe der Aussparungen 18 an den Vorsprüngen 2 beträgt maximal 3 mm. Daraus ergibt sich, daß die Vorsprünge 2 maximal 2 bis 2,5 mm von der Trägerplattenoberfläche 14 abstehen. Auf diese Weise ist gewährleistet, daß einerseits eine höchsten Belastungen genügende Verankerung geschaffen ist und gleichzeitig die nutzbare Belagstärke nicht wesentlich beeinträchtigt wird. Diese Angaben bezienicht wesentlich beeinträchtigt wird. Diese Angaben beziehen sich auf Trägerplattenstärken zwischen 5 und 7 mm. Bei stärkeren Trägerplatten bis zu 12 mm kann die Tiefe der Aussparungen 18 größer sein. Die Vorsprünge stehen aber auch bei stärkeren Trägerplatten nicht über 2 bis 2,5 mm von der Trägerplattenoberfläche 14 ab.

Wie aus Fig. 4 ersichtlich ist, ergeben sich bei einem Werkzeug mit pyramidenförmiger Spitze durch das Aufspalten der Vorsprünge 2 in vier Richtungen eine im wesentlichen quadratische Form der Vorsprünge 2 in Draufsicht.

Beim Verpressen der Reibbeläge 8 auf die Trägerplatte 6 kann das Reibmaterial des Reibbelages 8 in die Hinterschneidungen 4 eindringen und sich dort fest verankern.

Das Herstellverfahren ist kostengünstig, da keine zusätzlichen Teile für die Herstellung der Bremsbeläge 1 erforderlich sind und weil die erforderlichen Verfahrensschritte zur Herstellung der Vorsprünge 2 in den ohnehin erforderlichen Fertigungsablauf bei der Herstellung der Trägerplatte 6 integriert werden können, ohne daß zusätzliche Fertigungsschritt erforderlich wären. Auf diese Weise wird auch der Zeitaufwand zur Herstellung der Trägerplatte nicht vergrößert. Beispielsweise kann die Herstellung der Vorsprünge 2 im ersten Verfahrensschritt gemeinsam mit der Herstellung der Aussparungen 10 erfolgen, während das Aufspalten der Vorsprünge 2 gleichzeitig mit der Herstellung der Durchdrückung 12 erfolgen kann.

Fig. 5 zeigt den Bremsbelag 1 mit dem auf der Trägerplatte 6 befestigten Reibbelag 8. Die Rückseite des Bremsbelages 1 mit dem auf der Trägerplatte 6 befestigten Dämpfungsblech 16 ist in Fig. 6 dargestellt.

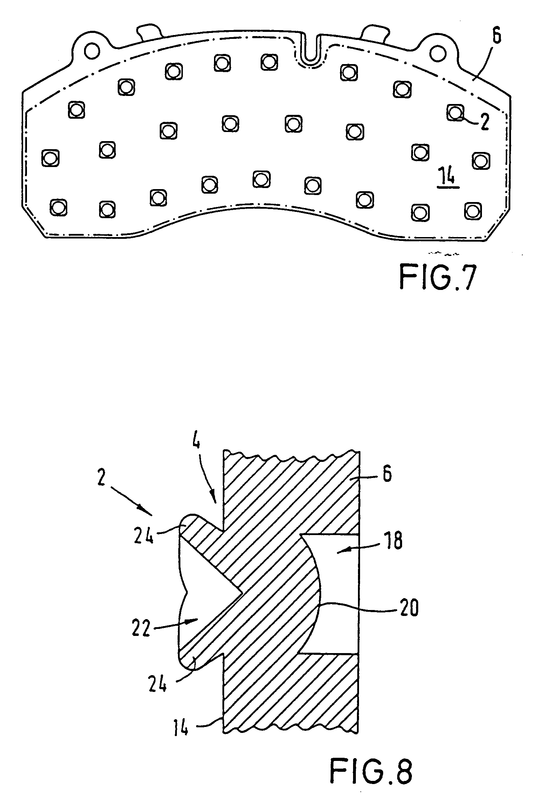

Fig. 7 ist eine Draufsicht auf die Trägerplatte eines zweiten Ausführungsbeispiels mit insgesamt 25 verteilt auf der Trägerplattenoberfläche 14 angeordnete Vorsprünge 2.

Fig. 8 zeigt die Form der Vorsprünge 2 bei dem Ausführungsbeispiel der Fig. 7. Aufgrund einer stärkeren Trägerplatte 6 von ca. 7 mm ergibt sich eine andere Form der Hinterschneidungen 4, sowie etwas höher vorstehende Vorsprünge 2 (2,5 mm).

Aufgrund der Aufspaltung des Vorsprungs 2 in dem zweiten Verfahrensschritt weisen alle Vorsprünge 2, wie aus den Fign. 3 und 8 ersichtlich ist, auf der dem Reibbelag 8 zugewandten Seite eine der Form des Werkzeugs entsprechende Aussparung 22 auf. Infolge dieser Aussparungen 22 haben die Vorsprünge 2 Schenkel 24, die unter einem Winkel von ca. 45° von der Trägerplattenoberfläche 14 abstehen und auf diese Weise von dem Reibbelag 8 ausgeübte Scherkräft besonders gut aufnehmen und in die Trägerplatte 6 einleiten können. Bei dem Ausführungsbeispiel der Fig. 3 mit geringerer Trägerplattenstärke (5 mm) bildet sich im Anschluß an die Schenkel 24 ein in etwa parallel zur Trägerplattenoberfläche 14 verlaufender Randbereich 26 aus, der die Tiefe der Hinterschneidungen 4 vergrößert.

## Patentansprüche

1. Verfahren zur Herstellung eines Bremsbelages (1) durch Ausbildung von Vorsprüngen (2) auf einer Trägerplatte (6) und durch Aufpressen eines Reibbelages (8) auf die Trägerplatte (6), bei dem die Trägerplatte (6) mit noppenartigen, durch Durchdrücken von Teilen der Trägerplatte (6) zur Reibbelagseite vorstehenden Vorsprüngen (2) mit Hinterschneidungen (4) ausgebildet wird,
**dadurch gekennzeichnet,**
daß die Vorsprünge (2) in einem ersten Schritt in einem Umformvorgang ausgebildet werden, und daß die noppenartigen Vorsprünge (2) in einem zweiten Schritt in Gegenrichtung zum Umformvorgang des ersten Schrittes aufgespalten und umgeformt werden, wodurch die Hinterschneidungen (4) gebildet werden.

2. Verfahren nach Anspruch 1, dadurch gekennzeichnet, daß die noppenartigen Vorsprünge (2) bei dem zweiten Schritt derart umgeformt werden, daß die Vorsprünge (2) um maximal ca. 2,0 bis 2,5 mm von der Trägerplattenoberfläche (14) abstehen.

3. Verfahren nach einem der Ansprüche 1 oder 2, dadurch gekennzeichnet, daß das Werkzeug für den zweiten Schritt um ca. 2,5 bis 3,0 mm ausgehend von der Oberkante der noppenartigen Vorsprünge (2) zugestellt wird.

4. Verfahren nach einem der Ansprüche 1 bis 3, dadurch gekennzeichnet, daß für den zweiten Schritt ein Werkzeug mit pyramidenförmiger Spitze verwendet wird.

5. Verfahren nach einem der Ansprüche 1 bis 4, dadurch gekennzeichnet, daß zur Herstellung der Trägerplatte (6) ein gewalzter Bandstahl verwendet wird.

6. Verfahren nach einem der Ansprüche 1 bis 5, dadurch gekennzeichnet, daß für den Umformvorgang des ersten Schrittes ein Werkzeug mit konkav geformter Spitze verwendet wird.

7. Verfahren nach einem der Ansprüche 1 bis 6, dadurch gekennzeichnet, daß in dem ersten Schritt im Querschnitt kreisförmige noppenartige Vorsprünge (2) mit einem Verhältnis von Durchmesser zu Trägerplattenstärke zwischen 1 und 2, vorzugsweise zwischen 1 und 1,5, hergestellt werden.

8. Verfahren nach einem der Ansprüche 1 bis 7, dadurch gekennzeichnet, daß bei dem Umformvorgang des ersten Schrittes die Trägerplatte (6) bei Trägerplattenstärken zwischen 5 und 7 mm zur Herstellung der noppenartigen Vorsprünge (2) um ca. 2,5 bis 3,5 mm, vorzugsweise ca. 3 mm, durchgedrückt wird.

9. Verfahren zur Herstellung einer Trägerplatte (6), bei dem die Trägerplatte (6) mit noppenartigen, durch Durchdrücken von Teilen der Trägerplatte (6) vorstehenden Vorsprüngen (2) mit Hinterschneidungen (4) ausgebildet wird, dadurch gekennzeichnet, daß die Vorsprünge (2) in einem ersten Schritt in einem Umformvorgang ausgebildet werden, und daß die noppenartigen Vorsprünge (2) in einem zweiten Schritt in Gegenrichtung zum Umformvorgang des ersten Schrittes aufgespalten und umgeformt werden, wodurch die Hinterschneidungen (4) gebildet werden, die von der Trägerplattenoberfläche (14) ca. 2,0 bis 2,5 mm abstehen.

## Claims

1. A method for producing a brake lining (1) by forming projections (2) on a support plate (6) and by pressing a friction lining (8) onto the support plate (6), wherein the support plate (6) is formed with nappy protruding projections including undercuts (4) that project by pressing projections (2) through portions of the support plate (6) towards the friction lining side,
characterized in
that, in a first step, the projections (2) are made in a forming process and, in a second step, the nappy projections (2) are split and reshaped in a direction opposite to that of the forming in the first step, thereby forming the undercuts (4).

2. The method of claim 1, characterized in that the nappy projections (2) are reshaped such in the second step that the projections (2) project from the support plate surface (14) for about 2.0 to 2.5 mm at most.

3. The method of one of claims 1 or 2, characterized in that the tool for the second step is advanced for about 2.5 to 3.0 mm starting from the top edge of the nappy projections (2).

4. The method of one of claims 1 to 3, characterized in that the second step uses a tool with a pyramid-shaped tip.

5. The method of one of claims 1 to 4, characterized in that rolled strip steel is used to produce the support plate (6).

6. The method of one of claims 1 to 5, characterized in that the forming process of the first step uses a tool with a concave tip.

7. The method of one of claims 1 to 6, characterized in that, in the first step, nappy projections (2) of circular cross-sectional shape with a ration of diameter to support plate thickness between 1 and 2, preferably between 1 and 1.5, are made.

8. The method of one of claims 1 to 7, characterized in that in the shaping process of the first step, the support plate (6) is pierced to a depth of about 2.5 to 3.5 mm, preferably about 3 mm, at support plate thicknesses between 5 and 7 mm, so as to obtain the nappy projections (2).

9. A method for producing a support plate (6), the support plate (6) being formed with nappy protruding projections including undercuts (4) by pressing projections (2) extending from portions of the support plate (6) thereinto, characterized in that, in a first step, the projections (2) are formed in a forming process and, in a second step, the nappy projections (2) are split and reshaped in a direction opposite to that of the forming in the first step, thereby forming the undercuts (4) that extend about 2.0 to 2.5 mm from the support plate surface (14).

## Revendications

1. Procédé de fabrication d'une garniture de frein (1) par formation de saillies (2) sur une plaque support (6) et engagement par pression d'une garniture de friction (8) sur la plaque support (6), procédé dans lequel la plaque support (6) avec saillies (2) en forme de bouton obtenues par enfoncement de parties de la plaque support (6) du côté de la garniture de friction est façonnée avec des contre-dépouilles (4),
caractérisé en ce que, dans une première étape, les saillies (2) sont réalisées dans un processus de formage et en ce que, dans une seconde étape, les saillies (2) en forme de bouton sont fendues et déformées en sens opposé au processus de formage de la première étape , ce par quoi les contre-dépouilles (4) sont réalisées.

2. Procédé selon la revendication 1, caractérisé en ce que les saillies (2) en forme de bouton sont déformées au cours de la seconde étape de telle façon que les saillies (2) soient écartées de la surface de la plaque de support (14) au maximum d'environ 2,0 à 2,5 mm .

3. Procédé selon l'une des revendications 1 ou 2, caractérisé en ce que l'outil pour la seconde étape est avancé d'environ 2,5 à 3,0 mm à partir du bord supérieur des saillies (2) en forme de bouton.

4. Procédé selon l'une des revendications 1 à 3, caractérisé en ce que, pour la seconde étape, un outil ayant une pointe en forme de pyramide est utilisé.

5. Procédé selon l'une des revendications 1 à 4, caractérisé en ce que, pour la fabrication de la plaque support (6), un feuillard d'acier laminé est utilisé.

6. Procédé selon l'une des revendications 1 à 5, caractérisé en ce que , pour le processus de formage de la première étape, un outil ayant une pointe de forme concave est utilisé.

7. Procédé selon l'une des revendications 1 à 6, caractérisé en ce que, dans la première étape, sont réalisées des saillies (2) en forme de bouton circulaires en section transversale avec un rapport du diamètre à l'épaisseur de la plaque support compris entre 1 et 2, de préférence compris entre 1 et 1,5.

8. Procédé selon l'une des revendications 1 à 7, caractérisé en ce que, lors du processus de formage de la première étape, la plaque support (6), pour des épaisseurs de plaque support comprises entre 5 et 7 mm, est enfoncée d'environ 2,5 à 3,5 mm , de préférence d'environ 3 mm, pour la fabrication des saillies (2) en forme de bouton.

9. Procédé de fabrication d'une plaque support (6) dans lequel la plaque support (6) avec des saillies (2) en forme de bouton obtenues par enfoncement de parties de la plaque support (6) du côté de la garniture de friction est façonnée avec des contre-dépouilles (4), caractérisé en ce que, dans une première étape, les saillies (2) sont réalisées dans un processus de formage, et en ce que, dans une seconde étape, les saillies (2) en forme de bouton sont fendues et déformées en sens opposé au processus de formage de la première étape, ce par quoi sont réalisées les contre-dépouilles (4), qui s'écartent d'environ 2,0 à 2,5 mm de la surface de la plaque de support (14).
